# EUROPÄISCHE PATENTSCHRIFT

(11) **EP 0 739 800 B1**
(45) Veröffentlichungstag und Bekanntmachung des Hinweises auf die Patenterteilung: **26.08.1998**
(21) Anmeldenummer: 96250092.2
(22) Anmeldetag: 24.04.1996
(51) Int. Cl.: B61D 17/04, B61D 17/18, B61D 27/00, B62D 21/17

(54) **Wagenkastenaufbau, insbesondere für Reisezugwagen**
Carriage configuration especially for railway carriages
Configuration de la caisse notamment pour voitures ferroviaires

(30) Priorität: 27.04.1995 DE 19516259
(43) Veröffentlichungstag der Anmeldung: 30.10.1996
(73) Patentinhaber: Deutsche Waggonbau AG, 12526 Berlin (DE)
(72) Erfinder: Reiche, Axel, 15711 Deutsch Wusterhausen (DE); Plamper, Rudolf, 10369 Berlin (DE)

(56) Entgegenhaltungen:
- EP-A- 0 260 200
- EP-A- 0 266 767
- DE-U- 9 318 135
- DE-U- 9 320 494
- FR-A- 2 076 463

## Beschreibung

Die Erfindung betrifft thermisch gedämmte Fahrzeuge, insbesondere Reisezugwagen mit vorwiegend spantenlosen Tragwerken aus längsverlaufenden metallischen Hohlkammerstrangpreßprofilen, entsprechend dem Oberbegriff des Anspruchs 1.

Allgemein bekannt sind Wagenkästen, deren tragende Außenkontur in Differentialbauweise aus versteiften Blechen oder in Integralbauweise aus Strangpreßprofilen gebildet wird. Teilweise werden auch Kunststoffbauteile in Sandwichbauweise eingesetzt. Die Dämmstoffe sind entweder innen zwischen den Gerippeelementen eingefügt oder an den Innenflächen der Strangpreßprofile befestigt. Den Fahrgästen zugewandte Innenverkleidungsplatten verdecken die dahinterliegenden Dämmstoffe. Bei einer weiteren bekannten Bauweise nach EP 0148 123 A2 befindet sich der Dämmstoff partiell auf der Außenseite der Strukturebene und wird von mechanisch befestigten Außenhautplatten mittels Abstandhaltern am Tragwerk fixiert. Einerseits wird der Fußbodenbereich dabei nicht von außen gedämmt, andererseits stellen die Abstandhalter zwischen dem Tragwerk und den Außenhautplatten eine Wärmebrücke dar und leiten den Körperschall in die Struktur ein. Die Befestigung der Außenhautplatten ist darüber hinaus nicht für die Druckbeaufschlagung im Hochgeschwindigkeitsverkehr geeignet. Die Abdichtung der mittels Abstandhaltern befestigten Außenhautplatten gegenüber äußeren Einflüssen, insbesondere beim Befahren von Waschanlagen, ist mit dieser bekannten Art nicht dauerhaft realisierbar. Die Durchfeuchtung der Dämmstoffe und strukturseitige Korrosionserscheinungen sind die Folge. Der Montageaufwand beim Anbringen der Abstandhalter am Wagenkasten und beim Befestigen der Außenhautplatten ist relativ hoch. Der hohe Aufwand zur Herstellung und Montage von vielen unterschiedlichen Bauteilen (Abstandhalter, Dichtungselemente, Befestigungselemente, Profile, elastische Zwischenlagen) steht einer wirtschaftlichen Fertigung entgegen. Auch sind die elastischen Zwischenlagen schwingungstechnisch wenig wirksam. Die Dämmstoffe müssen mit erheblichem Aufwand paßgenau zugeschnitten und zwischen den Abstandhaltern befestigt werden. Die eingehangenen und geklemmten Außenhautplatten werden bei unterschiedlichen Beladungszuständen, bei Temperaturschwankungen, bei Zugbegegnungen (Druckstöße), bei Toleranzproblemen und bei Alterung der elastischen Dichtelemente klappern, aneinander reiben und letztendlich undicht. Eine den jetzigen Design-vorstellungen entsprechende Lösung mit zugleich aerodynamisch vorteilhafter ebener Außenfläche des Wagens ist mit den bekannten Konstruktionen schwer realisierbar.

Aufgabe der Erfindung ist es, einen Wagenkastenaufbau der eingangs genannten Art zu schaffen, bei dem der gesamte Wagenkasten durch seinen besonderen konstruktiven Aufbau gleichmäßig gut gedämmt wird und die Nachteile der Bildung von Wärmebrücken, die durch die Abstandhalter der bekannten Außenbeplankung hervorgerufen werden, beseitigt werden, weiterhin der Wagenkasten leichter gebaut werden kann und so ausgebildet ist, daß eine den thermischen, akustischen und mechanischen Anforderungen entsprechende homogene Dämmung erreicht wird sowie eine energetisch und physiologisch vorteilhafte Klimatisierung und eine verbesserte sinnvolle und rationelle Funktionsverknüpfung (Synergieeffekt) zwischen dem Tragwerk, der Wärme- und Schalldämmung, der Kanalführung und der Befestigung der Innenausstattung möglich ist.

Das technische Problem wird erfindungsgemäß durch die kennzeichnenden Merkmale gelöst, das heißt, des Patenanspruchs 1 daß das gesamte Tragwerk einschließlich des Fußbodens von einem schwingungsfähigen Masse- Federsystem eingehüllt wird, in das die akustische und thermische Dämmung sowie der Schutz vor äußeren Einflüssen integriert ist, wobei das Dämmaterial von innen nach außen hin schichtweise und / oder kontinuierlich dichter ausgebildet ist und mit einer stark verdichteten und widerstandsfähigen äußeren Fläche endet. Die Erfindung wird durch weitere Merkmale in den Unteransprüchen zwei bis elf gekennzeichnet.

Ein Ausführungsbeispiel der Erfindung soll an Hand der Zeichnungen näher erläutert werden. Die Zeichnungen zeigen in:
- Fig.1:: Den schematischen Querschnitt eines Reisezugwagens aus Leichtmetall- Hohlkammerprofilen,
- Fig.2:: die Einzelheit "X" nach Figur 1,
- Fig.3:: die Einzelheit "Y" nach Figur 1,
- Fig.4:: die Einzelheit "Y" nach Figur 1 mit integrierter, plattenförmiger Schicht und mit durchbrochenen plattenförmigen Schichten sowie mit Folie an der Außenhaut,
- Fig.5:: die Einzelheit "Z" nach Figur 1,
- Fig.6:: die Einbeziehung der Fenster in das System der Mantelheizung mit horizontalem Medienstrom,
- Fig.7:: die Einbeziehung der Fenster in das System der Mantelheizung mit vertikalem Medienstrom in den Fensterzwischenräumen,
- Fig.8:: den Schnitt durch die Seitenwand mit außen auf der Struktur aufgesetztem Fensterpaket.

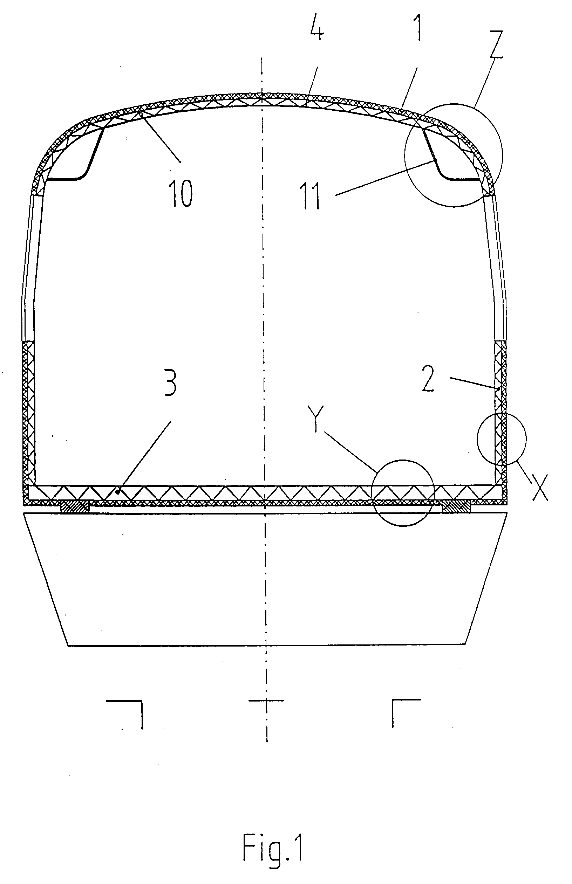

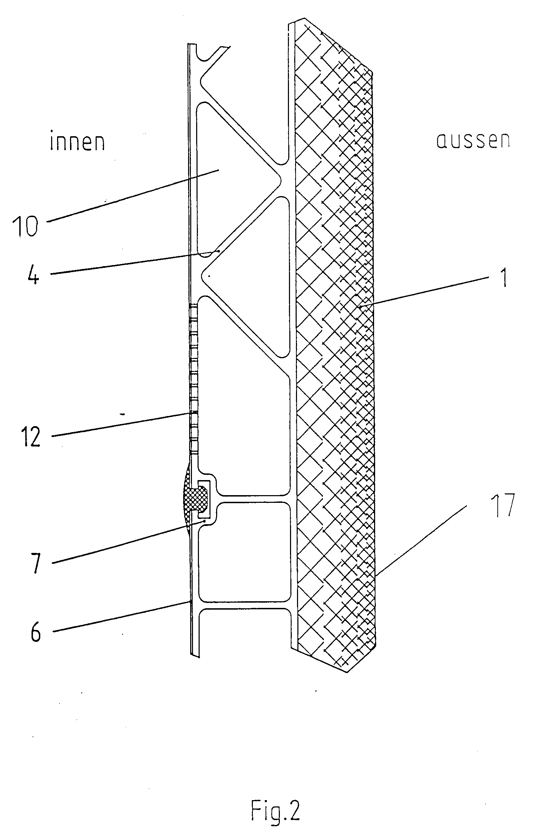

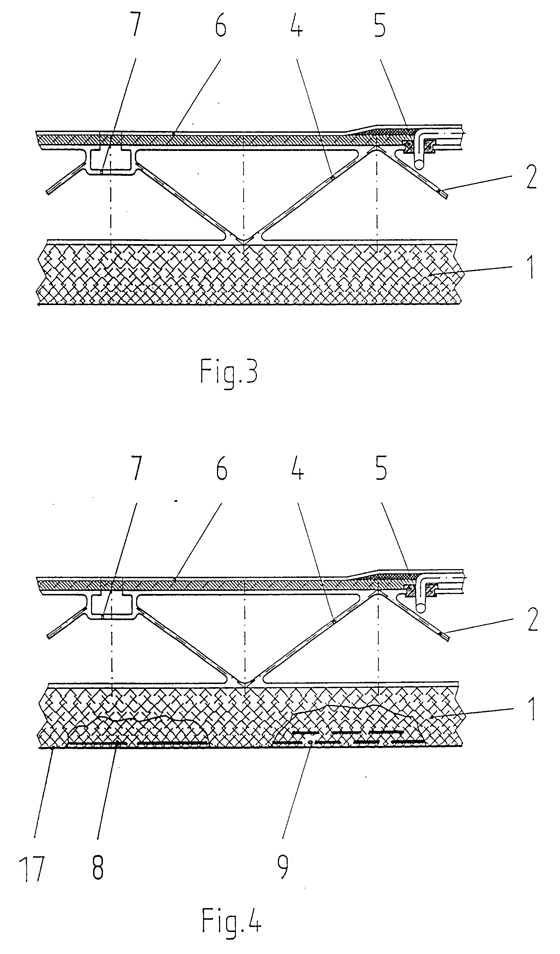

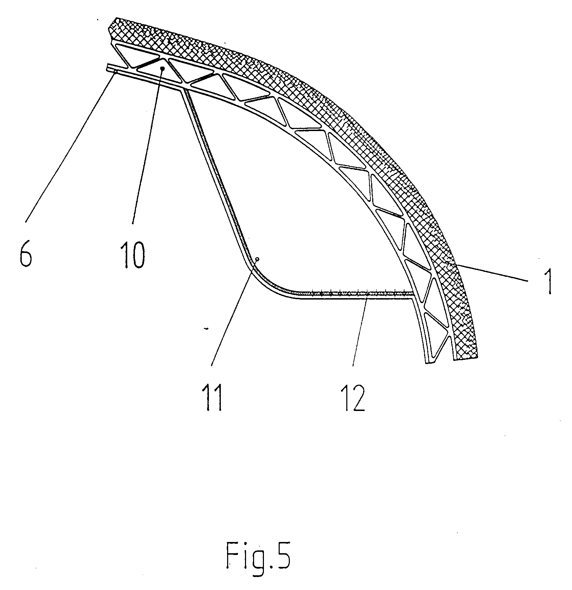

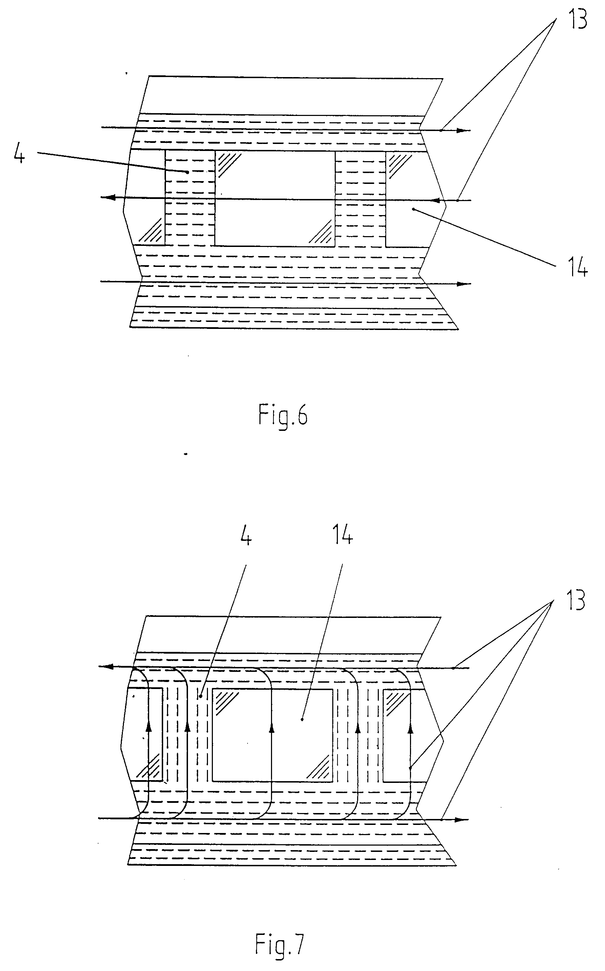

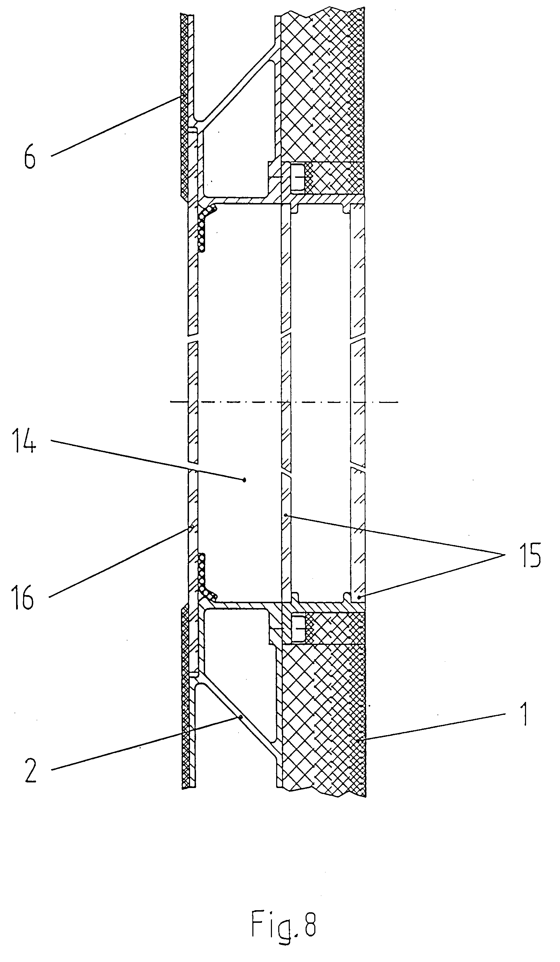

Gemäß Fig.1 und 2 ist ein gesamtes Tragwerk 2 mit Innenverkleidung 6 einschließlich Fußboden 3 aus Strangpreßprofilen 4 mit Hohlkammern 10 von einem schwingungsfähigen Masse- Federsystem 1 eingehüllt, wobei das Dämmaterial von innen nach außen hin schichtweise und / oder kontinuierlich dichter ausgebildet ist und mit einer stark verdichteten und widerstandsfähigen äußeren Fläche endet. Die Einhüllung des gesamten Tragwerks 2 mit dem schallabsorbierenden und wärmedämmenden Masse- Federsystem 1 schafft gute Voraussetzungen für die Realisierung von aktiv isolierten Wagenkästen. Die strukturseitig in den Strangpreßprofilen 4 vorhandenen Hohlräume 10 werden zur aktiven Isolierung in Fahrzeuglängsrichtung mit getrockneten, gasförmigen Medien 13 (Fig.6 und Fig.7) durchströmt. Daraus erwächst die Möglichkeit, eine komfortverbessernde, gleichmäßige Klimatisierung der Wagen umzusetzen. Energetische Vorteile ergeben sich aus der Abwärmenutzung aus der Abluft und der Nutzung von unkontinuierlich anfallenden Verlustenergien der elektrischen Verbraucher. Dabei fungiert die Metallstruktur des Tragwerkes 2 als Wärmespeicher und Wärmetauscher, so daß nur geringe Temperaturschwankungen im Fahrzeuginnern auftreten. Die verbesserte homogene Wärmedämmung außerhalb der metallischen Struktur verringert den Wärmedurchgang im Außenwandbereich einschließlich des Fußbodens 3 und trägt ebenfalls zur Energieeinsparung bei. Die multifunktionelle Nutzung der Strangpreßprofile 4 beinhaltet auch die Verlegung von Rohren und Versorgungsleitungen 5 (Fig.3) in den Hohlkammern 10, wobei nur die inneren Wände der Strangpreßprofile 4 oder ihre Stirnseiten zur Ein- und Ausleitung von Kabeln, Luft- und anderen Leitungen sowie Medienströmen sektionell unterbrochen werden und dadurch eine Voraussetzung für einen druckertüchtigten Raum innerhalb des Tragwerkes 2 vorhanden ist. Dadurch können zusätzliche Anschweißteile und Befestigungselemente entfallen und der Frostschutz der Leitungen wird gewährleistet. Die Durchströmung der Hohlräume 10 des Wagenkastenquerschnitts einschließlich Fensterzwischenräume 14 (Fig.6, Fig.7 und Fig.8) mit klimatisierten Medien 13 im geschlossenen System schafft im Innern des Zuges für die Reisenden ein sehr homogenes Temperatur- Behaglichkeitsfeld bei geringen Raumluftgeschwindigkeiten und schafft dadurch einen erhöhten Reisekomfort. Die Innenverkleidung 6 einschließlich Fußbodenbelag wird direkt auf der ebenen Innenseite des Tragwerkes 2 direkt befestigt, beispielsweise verklebt. Vorzugsweise werden dazu textile Verkleidungsmaterialien verwendet. Die Verkleidungsmaterialien übernehmen dekorative, schallabsorbierende und wärmespeichernde Aufgaben und werden dennoch leichter als bei bekannten Wagenkonstruktionen, da keine selbsttragenden Plattenmaterialien benötigt werden. In den Strangpreßprofilen 4 sind Befestigungsschienen 7 (Fig.3) integriert, die eine variable Anordnung der Sitze, Trennwände und anderer Inneneinrichtungsgegenstände gewährleisten. Die direkte Anbringung dieser Gegenstände an dem Tragwerk 2 erleichtert die Montage und schafft gute Voraussetzungen für die Verwendung von leichten Verbindungselementen. Mit der Einbringung von einer größeren Anzahl verhältnismäßig kleiner Luftaustrittsöffnungen 12 in den strukturseitig integrierten Kanälen der Hohlkammern 10 gemäß Fig.5, bzw. in separat verlegten Klimakanälen 11 wird eine zugluftfreie Frischluftversorgung der Reisenden gewährleistet. Die Verkleidung der Luftaustrittsöffnungen 12 mit luftdurchlässigen, textilen Geweben wirkt schallabsorbierend und schafft ein dekoratives Erscheinungsbild im Wageninnern. Die Montage von Fensterpaketen 15 gemäß Fig.8 erfolgt von außen durch einfaches Aufsetzen auf die ebene Strukturfläche. Bei dieser konstruktiven Lösung vereinfacht sich die Montage und Demontage der Fensterpakete 15. Das außenliegende Masse- Federsystem 1 hat die gleiche Schichtdicke wie die Fensterpakete 15. Dadurch entfallen die bisher notwendigen Absätze in der Struktur mit statisch nachteiligen Versatzmomenten. Die Schalldämmung der Fenster wird durch eine separate dritte Scheibe 16 in der inneren Strukturebene verbessert. Diese Scheibe 16 fungiert als Wärmetauscherfläche des Mantelheizsystems und kann für eventuell notwendige Reinigungszwecke vom Wageninnern her mit bekannten Mitteln geöffnet werden. Die gestalterisch vorteilhafte Umsetzung eines optisch durchgehenden Fensterbandes auf der Außenseite des Fahrzeuges ist ebenfalls ohne negative Auswirkungen auf die Rohbaustruktur realisierbar. Das Masse- Federsystem 1 kann wie in Fig.4 schematisch dargestellt, mit plattenförmigen Schichten 8 verstärkt und stabilisiert werden. Diese plattenförmigen Schichten 8 sind in dem Masse-Federsystem 1 eingebettet. Die Verbindung dieser plattenförmigen Schichten 8 mit dem Masse- Federsystem 1 wird durch Durchbrüche 9 verbessert, wobei bei mehreren plattenförmigen Schichten 8 die Durchbrüche 9 versetzt zueinander angeordnet werden können. Die verdichtete Außenschicht kann mit einer strapazierfähigen Folie 17 versehen werden. Es ist denkbar und im Sinne der Erfindung diese Folie 17 farblich zu gestalten. Als weitere Ausbildung kann an dem nach außen immer dichter werdenden und mit einer festen Außenhaut endenden Masse- Federsystem 1 eine in der Zeichnung nicht dargestellte bekannte Außenbeplankung ohne Abstandhalter befestigt, beispielsweise geklebt werden.

Die Erfindung ist vorteilhaft auch für Fahrzeuge in Doppelstockausführung und für den Hochgeschwindigkeitsverkehr einsetzbar. Die multifunktionelle Nutzung der Hohlkammern 10 der Strangpreßprofile 4 am gesamten Umfang des Wagenkastens zur gleichmäßigen Klimatisierung einschließlich der Fenster, zur einfachen Befestigung leichter Innenverkleidungen 6, zur Integration von Befestigungsschienen 7 für die variable Anordnung der Inneneinrichtung und zur Abwärmeverwertung führt zur Energieeinsparung, zur Senkung der Fahrzeugmasse, zur Verbesserung des Reisekomforts und zur rationellen Montage der Fahrzeuge. Die Innenverkleidung 6 übernimmt dekorative, schallabsorbierende und wärmespeichernde Aufgaben und wird dünnwandiger und leichter als bei bekannten Wagenkonstruktionen ausgebildet. Die schall- und wärmedämmende Umhüllung des gesamten Tragwerks 2 gestattet die konsequente Nutzung der strukturseitig vorhandenen Hohlräume 10 als Klimakanäle für die Mantelheizung. Energetische Vorteile ergeben sich aus der Nutzung von Verlustenergien, die u.a. bei den elektrischen Verbrauchern anfallen und nicht mehr an die Umgebung abgegeben werden. Dabei fungiert die Metallstruktur des Wagenkastens als Wärmetauscher und Wärmespeicher, sodaß nur geringe Temperaturschwankungen im Fahrzeuginnern auftreten.

Die Einbeziehung der Fenster in das System der Mantelheizung schafft im Passagierraum ein sehr homogenes Temperatur- Behaglichkeitsfeld bei geringen Raumluftgeschwindigkeiten und dadurch einen erhöhten Reisekomfort. Die in der Zuluft zuzuführende Wärmemenge kann im Heizbetrieb energetisch vorteilhaft reduziert werden. Die Fahrzeugkonstruktion ist aufgrund der ganzgeschweißten Struktur aus Strangpreßprofilen 4 mit Hohlkammern 10 druckertüchtigt ausgelegt und ohne aufwendige Zusatzmaßnahmen hochgeschwindigkeitstauglich. Die Ausbildung der Wärme- und Schalldämmung mit integrierter Schutzschicht, die die metallische Struktur vollflächig einhüllt, gewährleistet eine druckertüchtigte, strömungsgünstige und dekorative Gestaltung der Fahrzeugaußenkontur.

### Aufstellung der verwendeten Bezugszeichen:

- 1: Masse-Federsystem
- 2: Tragwerk
- 3: Fußboden
- 4: Strangpreßprofil
- 5: Rohre und Versorgungsleitungen
- 6: Innenverkleidung
- 7: Befestigungsschiene
- 8: plattenförmige Schicht
- 9: Durchbruch
- 10: Hohlkammer
- 11: Klimakanal
- 12: Luftaustrittsöffnung
- 13: Medium
- 14: Fensterzwischenraum
- 15: Fensterpaket
- 16: Scheibe
- 17: Folie

## Patentansprüche

1. Wagenkastenaufbau, insbesondere für Reisezugwagen, mit vorwiegend spantenlosem Tragwerk aus längsverlaufenden, metallischen Hohlkammerstrangpreßprofilen, dadurch gekennzeichnet, daß das gesamte Tragwerk (2) einschließlich Fußboden (3) aus Strangpreßprofilen (4) mit Hohlkammern (10) von einem aus Dämmaterial gebildeten, schwingungsfähigen Masse-Federsystem (1) eingehüllt wird, wobei das Dämmaterial von innen nach außen hin schichtweise und / oder kontinuierlich dichter ausgebildet ist und mit einer stark verdichteten und widerstandsfähigen äußeren Fläche endet.

2. Wagenkastenaufbau nach Anspruch 1, dadurch gekennzeichnet, daß in dem Masse-Federsystem (1) mindestens eine plattenförmige Schicht (8) eingebettet ist.

3. Wagenkastenaufbau nach Anspruch 1 und 2, dadurch gekennzeichnet, daß Durchbrüche (9) in den Schichten (8) vorgesehen sind, die bei mehreren plattenförmigen Schichten (8) versetzt zueinander angeordnet sind.

4. Wagenkastenaufbau nach Anspruch 1 bis 3, dadurch gekennzeichnet, daß die verdichtete Außenschicht mit einer strapazierfähigen Folie 17 versehen ist.

5. Wagenkastenaufbau nach Anspruch 1, dadurch gekennzeichnet, daß in den Hohlkammern (10) der Strangpreßprofile (4) des Tragwerkes (2) Versorgungsleitungen eingebettet sind.

6. Wagenkastenaufbau nach Anspruch 1 und 5, dadurch gekennzeichnet, daß die Hohlkammern (10) der Strangpreßprofile (4) des Tragwerkes (2) als Klimakanäle ausgebildet sind und am gesamten Wagenumfang von Medien im geschlossenen System durchströmt werden.

7. Wagenkastenaufbau nach Anspruch 6, dadurch gekennzeichnet, daß an den inneren Wänden der Strangpreßprofile (4) oder ihren Stirnseiten zur Ein- und / oder Ausleitung Anschlüsse (5) vorgesehen sind.

8. Wagenkastenaufbau nach Anspruch 1 und 5, dadurch gekennzeichnet, daß ausgewählte innenliegende Hohlkammern (10) des Tragwerkes (2) oder separat verlegte Klimakanäle (11) in Richtung der Innenräume eine Vielzahl verhältnismäßig kleiner Öffnungen (12) aufweisen.

9. Wagenkastenaufbau nach Anspruch 1, dadurch gekennzeichnet, daß wahlweise in den Bereichen zwischen den Fenstern Strangpreßprofile (4) oder Bauteile in Differentialbauweise senkrecht angeordnet sind.

10. Wagenkastenaufbau nach Anspruch 1, dadurch gekennzeichnet, daß in dem Tragwerk (2) innen längsverlaufende Befestigungsschienen (7) integriert sind.

11. Wagenkastenaufbau nach Anspruch 1 bis 3, dadurch gekennzeichnet, daß an dem nach außen dichter werdenden Masse- Federsystem (1) Außenplatten ohne Abstandhalter befestigt sind.

## Claims

1. Carriage configuration for railway carriages, particularly for passenger carriages, with a predominantly frameless support structure of longitudinal, metallic hollow chamber extruded profiles, characterized by the fact, that the entire support structure (2), including the floor (3) made form extruded profiles (4) with hollow chambers (10), is enclosed by an oscillatory mass spring system consisting of insulating material (1), whereat the insulating material is built-up in layers or continually from the inside to the outside and ends with a high-density and highly resistant outer surface.

2. Carriage configuration for railway carriages according to Claim 1, characterized by the fact, that at least one plate-like layer (8) is embedded in the mass spring system (1).

3. Carriage configuration for railway carriages according to Claims 1 and 2, characterized by the fact, that openings (9) are provided in the layers (8) which, in case of multiple plate-like layers (8), are arranged offset to each other.

4. Carriage configuration for railway carriages according to Claims 1 to 3, characterized by the fact, that the compacted exterior layer is provided with an wear-resistant foil (17).

5. Carriage configuration for railway carriages according to Claim 1, characterized by the fact, that supply lines are embedded in the hollow chambers (10) of the extruded profiles (4) of the support structure (2).

6. Carriage configuration for railway carriages according to Claims 1 and 5, characterized by the fact, that the hollow chambers (10) of the extruded profiles (4) of the support structure (2) are designed as air conditioning ducts, allowing media to flow through a closed system in the entire area of the carriage.

7. Carriage configuration for railway carriages according to Claim 6, characterized by the fact, that connectors (5) for supply and discharge are provided on the inner walls or the faces of the extruded profiles (4).

8. Carriage configuration for railway carriages according to Claim 1 and 5, characterized by the fact, that selected inner hollow chambers (10) of the support structure (2) or separately installed air conditioning ducts (11) have a multitude of relatively small openings (12) towards the internal spaces.

9. Carriage configuration for railway carriages according to Claim 1, characterized by the fact, that, as a matter of choice, extruded profiles (4) or components in differential construction are arranged in the area between the windows.

10. Carriage configuration for railway carriages according to Claim 1, characterized by the fact, that longitudinal mounting rails (7) are integrated in the support structure (2).

11. Carriage configuration for railway carriages according to Claims 1 to 3, characterized by the fact, that known exterior plates are mounted without spacers on the mass spring system (1), which is growing increasingly dense towards the outside.

## Revendications

1. Configuration de la caisse notamment pour voitures ferroviaires, avec structure pratiquement sans anneaux de raidissement, constituée de profilés filés creux métalliques disposés en long, caractérisée par le fait que l'ensemble de la structure (2), y compris le plancher (3) en profilés filés (4) avec chambres creuses (10), est enveloppée d'un système de ressorts de masse (1) vibrant composé d'un matériau isolant, le matériau isolant étant de plus en plus dense, formé de couches et / ou continu de l'intérieur vers l'extérieur et se terminant par une surface extérieure fortement comprimée et résistante.

2. Configuration de la caisse selon la spécification 1, caractérisée par le fait qu'au moins une couche en forme de plaque (8) est enrobée dans le système de ressorts de masse (1).

3. Configuration de la caisse selon les spécifications 1 et 2, caractérisée par le fait que des ajours (9) sont prévus dans les couches (8) et décalés les uns par rapport aux autres lorsqu'il y a plusieurs couches en forme de plaque (8).

4. Configuration de la caisse selon les spécifications 1 à 3, caractérisée par le fait que la couche extérieure comprimée est équipée d'une feuille résistant à l'usure (17).

5. Configuration de la caisse selon la spécification 1, caractérisée par le fait que des câbles d'alimentation sont insérés dans les chambres creuses (10) des profilés filés (4) de la structure (2).

6. Configuration de la caisse selon les spécifications 1 et 5, caractérisée par le fait que les chambres creuses (10) des profilés filés (4) de la structure (2) sont utilisées comme conduits de climatisation et parcourues par des produits en circuit fermé sur tout le pourtour de la voiture.

7. Configuration de la caisse selon la spécification 6, caractérisée par le fait que des raccordements (5) sont prévus sur les parois internes des profilés filés (4) ou sur leurs faces avant, pour l'entrée et / ou la sortie des conduites.

8. Configuration de la caisse selon les spécifications 1 et 5, caractérisée par le fait que des chambres creuses (10) internes sélectionnées de la structure (2) ou que des conduits de climatisation posés séparément (11) présentent un grand nombre d'ouvertures relativement petites (12) en direction de l'intérieur.

9. Configuration de la caisse selon la spécification 1, caractérisée par le fait que des profilés filés (4) ou des éléments de construction à structure différentielle, au choix, sont disposés verticalement dans les espaces entre les fenêtres.

10. Configuration de la caisse selon la spécification 1, caractérisée par le fait que des rails de fixation (7) disposés en long à l'intérieur sont intégrés à la structure (2).

11. Configuration de la caisse selon les spécifications 1 à 3, caractérisée par le fait que des plaques externes connues sont fixées sans écarteurs sur le système de ressorts de masse (1) devenant de plus en plus dense vers l'extérieur.
